Europäisches Patentamt

European Patent Office

Office européen des brevets

(19)

(11) EP 0 572 098 B1

(12) **EUROPEAN PATENT SPECIFICATION**

(45) Date of publication and mention
of the grant of the patent:
**04.09.1996 Bulletin 1996/36**

(51) Int Cl.$^6$: **G11B 5/245**

(21) Application number: **93201769.2**

(22) Date of filing: **06.10.1987**

(54) **Magnetic transducer head structure**

Magnetwandlerkopfstruktur

Structure de tête de transducteur magnétique

(84) Designated Contracting States:
**AT BE CH DE ES FR GB IT LI LU NL SE**

(30) Priority: **06.10.1986 US 915734**
**10.04.1987 US 36915**

(43) Date of publication of application:
**01.12.1993 Bulletin 1993/48**

(62) Application number of earlier application in
accordance with Art. 76 EPC: **87308856.1**

(73) Proprietor: **Conner Peripherals, Inc.**
**San José California 95134-22128 (US)**

(72) Inventors:
• **Bolt, Michael Loren**
**Ann Arbor, Michigan 48103 (US)**

• **Sokolik, Edmund Louis**
**Warren, Michigan 48093 (US)**

(74) Representative: **Maggs, Michael Norman et al**
**Kilburn & Strode**
**30 John Street**
**London WC1N 2DD (GB)**

(56) References cited:
**EP-A- 0 174 714**       **EP-A- 0 408 808**
**GB-A- 1 500 593**       **US-A- 2 928 079**
**US-A- 3 171 107**       **US-A- 3 353 168**

• **PATENT ABSTRACTS OF JAPAN vol. 8, no. 10
(P-248)(1447) 18 January 1984 & JP-A-58 171 710**

## Description

This invention relates generally to the field of magnetic recording, and more particularly to transducer structures used for magnetic recording and reproducing ("read/write") operations. Still more particularly, the invention relates to magnetic transducer core structures which are particularly useful in digital data-storage devices, especially (but not exclusively) tape recorder devices ("tape drives") of the type used in such applications.

Most data storage and retrieval is done by use of magnetic recording apparatus, mainly disc drives and tape drives (the term "drive" having come to be accepted as the basic industry designator for recorder/reproducer devices). In the case of disc drives, there are both "hard" disc and "floppy" disc-type media, the "hard" disc being a rigid platter having a magnetizable surface upon which magnetic flux transitions are recorded by means of a transducer head which aerodynamically "flies" with respect to the surface of the disc, being spaced therefrom by a thin film of air. "Floppy" disc drives utilize magnetically recordable media which although disc-like in shape is much more in the nature of magnetic tape, being highly flexible and typically comprising a sheet of polymeric material carrying a surface coating of magnetizable metal oxide. In floppy disc drives, as in tape drives, recording is accomplished by maintaining direct contact between the moving media and the recording head, usually by projecting the tip of the head (at the magnetic "gap") into the plane of the flexible media as it moves past the head.

Tape drives typically, or at least frequently, feature a bi-directional recording and reproducing operation in which the tape is transported along its length from one end to the other during a first read or write operation and then transported back in the opposite direction for the next such operation, without rewinding the tape between the two successive recording operations as would usually be done in tape recording. This bi-directional operation is not characteristic in disc drives (whether "floppy" or "hard" disc media is involved), in which the disc-form media is continuously rotated in the same direction and all recording or reproduction on the media is done unidirectionally.

This rather fundamental difference in operational modes creates a corresponding fundamental difference in the nature of the transducers or heads which may be utilized. In the case of bi-directional reading and writing, a multi-gap head is used, but in the case of unidirectional recording only a single-gap head is necessary, which is much less expensive than a multi-gap head but has the disadvantage of only being able to read and write at different times; i.e., it cannot write and simultaneously read data, as is frequently desirable and is often provided for in tape drives.

Furthermore, in order to maximize the likelihood that the read gap will be properly positioned directly over the written track on the media, two essentially opposite approaches have come to be recognized in the art with respect to the multi-gap heads used in tape drives. The first of these involves use of a write gap which is substantially wider than the read gap, such that if the read gap is nominally positioned anywhere near the centre of a written track, the head is likely to be fully in registration with the track, i.e., recorded transitions extending across the entire height, i.e. length, of a the gap. The second such approach involves use of a head having a separate erase gap disposed ahead of the write gap, so that the media is erased cleanly before each writing operation takes place; thus, the writing is always accomplished on media having no residual signals. In this arrangement, a read gap is used which is considerably wider than the written track, so that the entire width of the written track is always likely to be completely straddled by the read gap. Since the separate erase gap eliminates all residual or extraneous signals recorded contiguous to the narrower written track, interference, cross-talk and the like will not be present in the read data stream.

Since the approaches just described can only be accomplished with multi-gap heads, they are not utilized in floppy disc drives, where only single-gap read/write heads are used. In order to provide a system somewhat analogous to the second arrangement described above, floppy disc drives frequently utilize a "tunnel erase" concept, in which separate erase gaps are provided on both sides of, and to the rear of, the single read/write gap. The function of the two such erase gaps is to "trim" the marginal edges of the written data track by erasing along both sides thereof, thus producing a resultant narrowed track of written data, the sides of which have no residual or extraneous recorded transitions. In this arrangement, the head structure is somewhat complex since it is necessary to space the erase gaps rearwardly of the read/write gap in order to eliminate or minimize both mechanical and magnetic interference problems, and of course there is the added requirement and expense of providing, and assembling, two separate erase gaps.

The tunnel-erase concept just described is not advantageous in bi-directional recording operations, since bi-directional use of that type of head would inherently necessitate the addition of another pair of erase gaps, spaced on the opposite side of the single read/write gap from the location of the first such set of erase gaps, in order to accommodate both of the possible mutually-opposite recording directions. The realities of manufacturing such a head do not favour its potential use, since the required accurate alignment of the various erase gaps with respect to themselves and with respect to the single read/write gap results in a different manufacturing process which inevitably adds substantial expense. Of course, there is also additional expense involved in the requirement of the second pair of erase gaps, in and of themselves.

In an effort to provide a solution for the difficulties and problems discussed above, it has heretofore been proposed to use a different form of core structure for such transducer heads, which in effect provides operational characteristics functionally representative of those typically found in multi-gap heads, while nonetheless having in fact only a single read/write gap.

More particularly, it has been proposed in the past, to use a transducer head whose magnetic core structure has a full-width write core disposed on one side of the gap and a partial-width read core on the opposite side of the gap. In this structure, special additional magnetic closure or return pieces are disposed on opposite sides of the comparatively narrow read core at the gap, to in effect fill the space created by narrowing the read core. These additional components serve as part of the write core structure during write procedures but are not intended to contribute to the read core output signal appearing on a sense coil accessing only the read core. For examples of such transducer core structures, reference is made to Japanese Patent Publications Nos 50-111817 (Pat. No. 5235618) and 58-171710 (Patent Abstracts Vol. 8, No. IO, P.248), as well as US-A-4085429 and EP-A-174714. The precharacterising portion of Claim 1 is based on this last document.

US-A-4085429 discusses the overriding importance of obtaining the most favourable signal-to-noise ratios possible in using such special-purpose transducers, and of isolating the read channel from the write channel therein, and this prior patent is predicated upon the use of certain allegedly critical limitations for the thickness, with respect to the magnetic gap, of isolation layers proposed for use between the narrowed read core and the special additional write core closures disposed on opposite sides of the read core.

Notwithstanding the factors just noted, the prior efforts of others in the field have until now failed to appreciate and take into consideration certain other highly significant factors involved in the design considerations for the special-purpose transducer-head core structure involved, and the present invention is based upon, and provides, recognition and disclosure of these important factors. Thus, the present invention provides new and valuable structural features and arrangements for such a core structure, involving improvements which are of such importance where high-density recording is involved as to ultimately make the difference between successful and unsuccessful operation, bearing in mind the underlying requirement that in actual operation such a device must be substantially free from spurious error and consistently reliable in performance.

According to one aspect of the present invention, a magnetic core structure for a transducer head particularly adapted for use in digital storage devices comprises: a magnetic circuit formed by magnetic core elements, the circuit having at least one gap where magnetic flux in the circuit may access a magnetically-recordable data storage media at a face of the head; the gap having a pair of mutually-spaced sides defined by first and second magnetic pole structures located generally opposite one another, at least one of which has a layered structure comprising a first strat and an adjacent second strata, the first strata having a thickness at the said face measured in a direction along the gap which is less than that of the other pole structure; magnetic isolation means disposed between the first and second strata at the said one pole structure; the second strata being arranged to shunt a portion of the magnetic circuit formed by the first strata, so providing a parallel magnetic return; characterised in that the second strata comprises a first portion adjacent the face of the head and a second portion comprising a stepped end extremity which is recessed from the face, the stepped end extremity reducing the effective overall magnetic reluctance of the second strata while making no substantial contribution, in use, to the effective length of the gap.

Accordingly, the present invention provides structural improvements and design criteria for "wide-write, narrow-read" magnetic transducer core structures, which improvements make high-density recording operation possible with attendant low error rates. Broadly speaking, the invention provides important structural and size relationships in the elements comprising the magnetic core; more particularly, the invention provides certain critical size relationships in the area of overlap between the read core and the special write core closures which, when carried through in the incorporation of isolation components (laminar elements, at times referred to as "strata"), provide the consummately desirable operational results just noted.

The invention may be carried into practice in various ways but two transducer head core structures embodying the invention will now be described by way of example with reference to the accompanying drawings, in which:

Fig. 1 is a sectionalized overhead plan view of a transducer head core structure not forming part of the invention;

Fig. 2 is an enlarged, front-elevational view of the structure shown in Fig. 1 taken along the plane II-II of Fig. 1;

Fig. 3 is a schematic representation showing the equivalent magnetic circuit for the core structures shown in the other figures;

Fig. 4 is a sectionalized overhead plan view of a first transducer head structure according to an embodiment of the invention;

Fig. 5 is an enlarged, fragmentary front elevational view of the structure shown in Fig. 4;

Fig. 6 is a further enlarged, fragmentary, front perspective view of the core structure shown in Fig. 4; and

Fig. 7 is a fragmentary, perspective view similar to Fig. 6 but showing a second core structure according to an embodiment of the invention as also illustrated in Fig. 5.

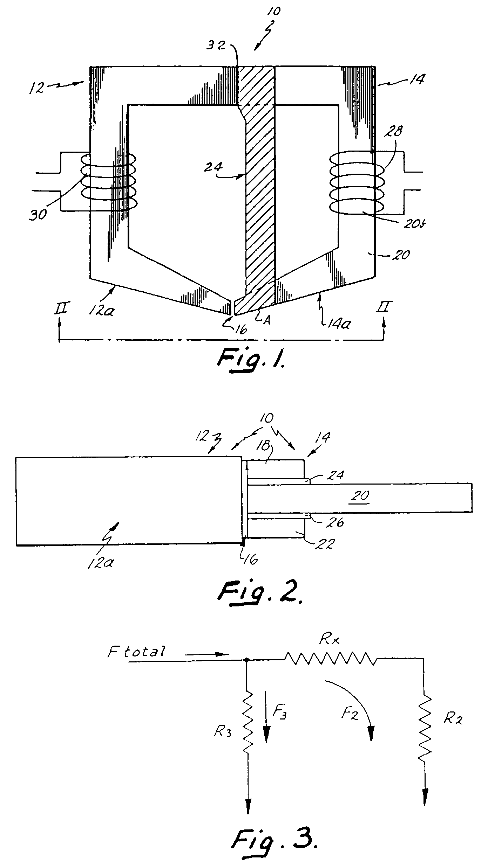

Referring now in more detail to the drawings, Figs. 1 and 2 show the overall nature of a transducer head core structure 10 in accordance herewith. As illustrated in these Figures, the core structure 10 includes differently-structured parts (essentially halves) 12 and 14. Considering the half or portion 12 of the core structure as being the "write" portion, it will be seen that this half of the core, shown at the left of the transducing gap 16, constitutes a single pole member whose height is the full height of the gap.

The portion 14 of the core structure 10, appearing at the right side of the transducing gap 16, is not a single monolithic structure like the portion 12, but is instead composite in form including (in this particular embodiment) three different component parts disposed in stratified or laminar form, designated 18, 20 and 22 respectively. Of these, the two outermost (side) members (sometimes referred to herein as "flanking strata") 18 and 22 comprise closures (returns) for the write core, whereas the central or medial strata 20 comprises the read core.

As discussed more fully below, it is extremely important for each of the three core elements, or strata, 18, 20 and 22 to be separated, i.e. magnetically isolated, from one another. For this reason, non-magnetic isolation members 24 and 26 are disposed between and preferably extend at least slightly beyond the boundaries of the write closures 18 and 22, as illustrated in Fig. 2, the read core 20 extending substantially beyond the isolation layers.

With reference to Fig. 1, it will be seen that the core structure 10 may be generally C-shaped in its overall configuration forming the recording gap 16 at the opening between two converging face portions 12a and 14a which basically define what is commonly referred to as the "cutback angle". Bearing in mind the relative height of the different strata shown in Fig. 2, it will be seen from Fig. 1 that the main write core 12 extends rearwardly from face portion 12a, has an electrical excitation or drive winding (a "write coil") 30 wound about an intermediate portion of it, and extends back toward and into contact (or other magnetic communication) with the other half of the overall core structure at a boundary or junction 32. At this rearward location, the three core elements 18, 20 and 22 located on the opposite side of junction 22 have essentially the same height relationship as they do at the transducing gap 16, and thus together correspond to the full height of the write core 12.

The upper and lower strata 18 and 22, i.e., the write closures, extend rearwardly from the transducing gap 16 in a much more direct manner than is true of the inner or medial read core strata 20, which has a configuration in plan which is essentially a mirror-image to that of the write core portion 12 described above (Fig. 1). Also, the read core medial strata 20 has an electromagnetic coil 28 wound about an intermediate portion 20b, which in accordance with the embodiment under discussion constitutes a read sense coil.

With regard to particular structural materials, the read and write cores 12 and 20 and the write closures 18 and 22 may in general be of any conventional magnetic material customarily used in transducer cores, i.e., "mu metal", ferrite, etc. The various components ("strata") constituting the different core elements may each comprise a "stack" of thin sheet-like laminae, as is often done to reduce eddy current effects, but this is not really essential in transducer cores generally, particularly where (as here) the intended application is to write and read relatively narrow and closely-spaced tracks of magnetic transitions. As will be understood, the isolation layers or elements 24 and 26 are to be of non-magnetic material, e.g. copper or brass, etc. Where the intended media is in the form of magnetic tape, the overall height of the head is preferably many times greater than the mere height of the magnetic core structure itself, and generally equals or exceeds the total width of the tape since the latter must slide lengthwise across the convex (and often curved) front face of the head during transducing operations and the tape should be supported by the head across its entire width. The opposite is generally true in floppy disc transducing procedures, wherein the pole pieces defining the gap typically form a rounded, bluntly conical projection which deforms the recording media into a complementary dimple as the media moves over the gap during recording. As already indicated above, the core structure may be embodied in a bead of that nature also, by merely using appropriate shape relationships and incorporating the basic structural attributes and concepts set forth herein.

As will be understood, since the preferred embodiment in accordance herewith refers to a transducer head for use with tape media, the overall height of the transducer head should be much higher than the mere height of a single-track core structure, such as is shown in Fig. 2, the general physical structure of the head (apart from the core) being structured according to known head-building techniques, in accordance with which a mounting block of non-magnetic material (e.g., brass) of the desired physical size for the overall head is used to mount the magnetic core components. Usually, such a mounting block takes the form of two complementary halves, which are joined together around the outside of the core structure, interstitial spaces being filled by an appropriate non-magnetic potting compound, such as epoxy, which may also be used as an exterior coating or shaping agent.

A transducer head structured generally in accordance with the foregoing provides the anomalous result of non-symmetric write/read width characteristics in a single-gap core and head. In the particular format generally referred to above, the write core (pole structure) 12 is configured, by its size and shape at the magnetic gap and the characteristics of the write coil winding 30, to write a track of magnetic transitions which are essentially as wide as the full length of the gap 16, i.e., the full width of core portion 12. On the other hand, the much narrower read core ("medial strata") 20 is configured, by its own size and shape, and by the characteristics of the read coil 28 wound upon its accessible intermediate portion 20b, to read a track width much narrower than the write core. Consequently, the overall head structure in the arrangement noted constitutes a head of single-gap configuration which writes a wide track but reads a narrow one.

Somewhat more particularly, it will be seen from the above that energization of the write coil 30 with electrical signals which it is desired to record will create corresponding magnetic flux patterns within the core structure 10, travelling around the paths so defined and across the transducing gap 16, at which position the width of the flux at the gap is actually a function of the height or width of the write core 12 and the overall height or width of all of the various strata (18, 20 and 22) constituting the opposite core half 14, i.e., essentially the same width as the write core 12. As a result, a recorded track of the same width is written on the media moving across the gap.

Accordingly, in a write mode, the magnetic flux which moves across the gap from core 12 to core 14 is actually returned across the rear portion of the core (i. e., across the boundary 32) by all three of the strata 18, 20 and 22. In a read mode, however, the magnetic circuit performance is different due to the relative configuration of the read core 20 and the position of the read coil 28, which is wound upon only the medially-disposed read core element 20 and not on either of the outer strata 18 and 22 which flank the read core; consequently, member 18 and 22 function only as write closures. Thus, with the read core disposed in coaxial alignment with a written track on the media, the read core pole piece will be aligned over only the centre portion of the written track on the media, and it will thus access considerably less than the full width of the magnetic transitions on the media. Accordingly, the magnetic flux flowing from the read core strata 20 to the rear boundary or junction 32 will be substantially less than the total available magnetic flux within the core itself, the write closures (i.e., the "peripheral" or "flanking" strata 18 and 22) serving in effect to shunt away from the read core a selected portion of the total magnetic flux which is not desired to be represented in the output (i.e., not desired to be "read"). Accordingly, a wide-write, narrow-read capability is provided, even though the head has but a single magnetic gap.

As indicated above, the selectively separate performance of the read core structure in relation to the write core structure of the disclosed apparatus is of primary importance in satisfying the desired objective. In large part, this consideration resolves itself down to the effective isolation of such two different core portions from one another, particularly during "read"-type transducing operation, at which time it is typical to encounter magnetic transitions on the recording media in proximity with the write closures ("flanking strata") 18 and 22 which are not desired to be reproduced in any manner.

For example, such transitions may simply comprise "noise" of undetermined origin, or unerased previously-recorded data, "over-write", etc. Of course, since the read sense winding 28 is disposed about only the read core ("medial strata") 20, and not about the write closures 18 and 22, the effect of flux transitions encountered at the gap 16 by write closures 18 and 22 will not induce a corresponding sense voltage in the read winding 28; nonetheless, it will be evident that "cross talk" may result in a number of ways, which generally may be considered as "leakage" between the corresponding read and write portions of the core structure, mutual inductance, etc.

In point of fact, effective isolation between the write closures 18 and 22 and the read core 20, respectively, is essential in order to limit the effects of such "noise" to the greatest extent possible. This is particularly true where high-density digital recording is to be accomplished and, as is well known, there appears to be a constant and continuing desire for ever-greater recording densities in order to maximize data storage in relation to the physical size of the media. Whereas the isolation of these read and write core components has been largely overlooked by others heretofore, however, the aforementioned US-A-4085429 provides for the use of isolating (non-magnetic) layers at the locations which have been identified; however, the entire thrust of this prior patent is that in order to be effective the thickness of such isolation layers is critical, and this prior patent states a requirement for a very specific range of such thickness, given in terms of the recording gap width.

The present invention is based upon different and alternative concepts from those just noted, which have heretofore gone unrecognised.

More particularly, with reference to Fig. 3, the simplified circuit shown in this figure represents the magnetic flux present in the magnetic circuit provided by the core structure 10. In this schematic, the label "F total" designates total flux flow in the magnetic circuit, and is comprised of the two branches F2 and F3, which represent the flux flowing through the read core and through the write closure, respectively. In this figure, the magnetic reluctance of the corresponding core parts is represented as resistance elements, element R3 being the combined reluctance of the two spaced write closures 18 and 22, Rx being in effect the composite reluctance of the two isolation layers 24 and 26, and R2 designating the magnetic reluctance of the read closure 20 alone; thus, the effective reluctance of the read path is (Rx + R2).

From the above, it will be seen that the degree of isolation in the disclosed multi-component core structure is a function of the magnetic reluctance of the write closures (R3) in relation to that attributable to the read structure (Rx + R2). Thus,

$$\frac{F2}{Ftotal} = \frac{R3}{R2+R3+Rx}$$

Of course,

$$Rx = 1/\mu_o \times 1/\mu_r \times t/A$$

where

$\mu_o$ is the permeability of free air,
$\mu_r$ is the permeability of the non-magnetic material used for the isolation layers,
$t$ = the thickness of the isolation layers,
and
$A$ = the common area included between the write closures 18 and 22 and the read closure 20, i.e., the corresponding overlap between these elements.

In accordance with the above, it may be seen that it is very important to make Rx large with respect to Re. While this may be accomplished by making the thickness of isolation layers large in relation to their effective area A this approach causes undesirable results because it produces a correspondingly wide-unrecorded "stripe" on the media during write operations which typically comprises unerased data from previous operations. Consequently, in accordance with the present invention the desirable result of making Rx large with respect to Re is achieved by making the common area A (see Fig. 1) small in relation to the thickness of the isolation layers 24 and 26, in particular of an order of magnitude sufficient to make the aforementioned flux ratio F2/Ftotal not more than about 5%, and in no event more than 10%. That is, the ultimate goal should be to maintain the common area A to a value permitting no more than about 10% leakage or cross talk, and preferably no more than about 5%, between the magnetic flux flowing in the write closures 18 and 22 and the read closure 20 disposed therebetween. As indicated above, it is in fact essential to maintain such a relationship in order to achieve reliable and consistent substantially error-free high-density digital recording.

To further and more explicity illustrate the foregoing, the width of a typical desired read core 20 may be on the order of half the total width of the write core 12 (for example .127 mm (five mils) and .254 mm (ten mils), respectively) and if the thickness (t) of the isolation members 24 and 26 is approximately .0127 mm (one-half mil) each (as in fact deemed appropriate in such a situation) the combined width of the two write closure members 18 and 22 will be .102 mm (four mils). The amount of undesired noise introduced by flux transitions "read" by the write closures 18 and 22 during read operation is modified by these size ratios: thus, where the dimensions are as stated above, and where the maximum allowable flux leakage margin is selected to be not more than ten percent,

$$\frac{F2}{Ftotal} = \text{less than } .10 \times \frac{5}{2}$$

or, stated in terms of magnetic reluctance,

$$\frac{F2}{Ftotal} = \frac{R3}{R2+R3+Rx} = \text{less than } .25$$

thus,

$$\frac{R3}{.25} - R3 - R2 = \text{less than } Rx$$

and

$$3R3 - R2 = \text{less than } Rx = \frac{t}{k} \, (1/A)$$

(where $k = \mu_o \times \mu_r$)
therefore, it is desired that

$$A = \text{less than } \frac{1}{3R3-R2} \times \frac{t}{k}$$

In a specific working example of the above, where

$$R3 = 6.9 \times 10^6$$

$$R2 = 4.4 \times 10^6$$

$$\mu_o = 4\pi \times 10^7$$

$$\mu_r = 1$$

$A = \text{less than } 0.6 \text{ mm}^2 \, (961 \text{ mils}^2)$

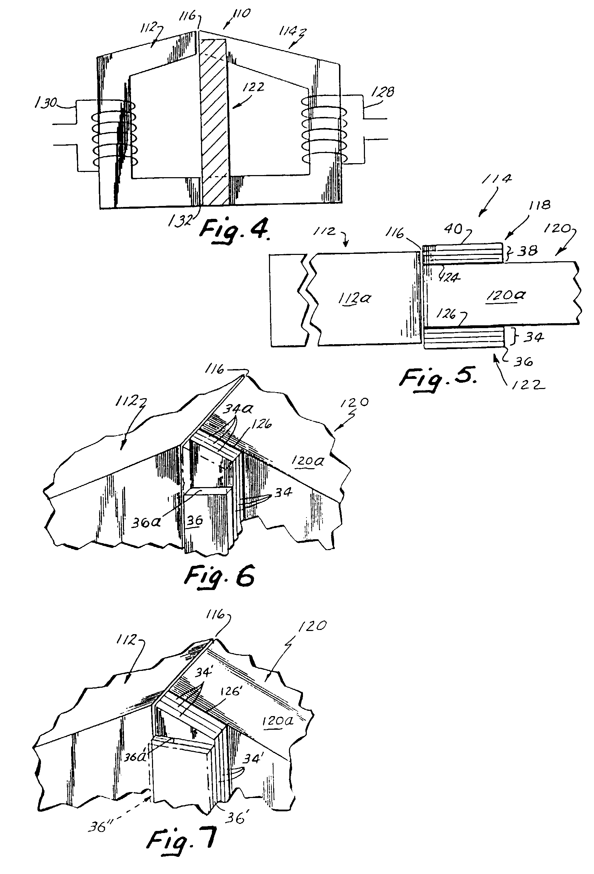

Two embodiments of the inventive concept described hereinabove are disclosed in Figs. 4-7. In light of the structural similarities between the two embodiments with respect to the head structure described above, like components are identified with like numerals bearing the prefix "1". Hence, for example, the core structure of Fig. 4, which is comparable to the core structure 10 of Fig. 1, is designated as 110, the core "halves" as 112 and 114, and so on. As with the embodiment illustrated in Figs. 1-3, the three main elements 118, 120 and 122 located on the opposite side of junction 132 from write core 112 have essentially the same height relationship as they do near the transducing gap 116, although the actual height relationship of the write closures 118 and 122 at the gap 116 preferably varies in accordance herewith, as described more fully below. Except for structural differences between closure member 18, 22 (Fig. 2) and closure members 118, 120 (Figs. 5-7), the core structures 10 and 110 are substantially equivalent. With reference to Figs. 5, 6 and 7, it will be noted that the write closures designated generally by the numerals 118 and 122 actually include several distinct and different component pieces. Closure 122, which is identical to closure 118, includes a number (here shown as three) of substantially identical, superimposed closure strips or elements 34 which are disposed immediately atop the isolation layer 126, together with one or more additional closure strips 36, which are positioned somewhat differently from closure strips 34.

As illustrated in Figs. 6 and 7, closure strips 34 have angularly-sloping end portions which are complementary to and symmetrical with the adjacent sloping face of the read core 120. In the embodiment shown in Fig. 6, the closure strips 34 do not completely fill the space along gap 116 provided by the reduced width of the read core 120. This remaining spacing is filled by the additional write closure strip 36, which is disposed immediately atop the outermost closure strip 34; however, it will be noted that the end extremity 36a of write closure 36 is recessed from the angled faces of both read core 120 and closure strips 34, which approach and define the gap 116. Furthermore, end face 36a of closure strip 36 is not angled like the faces 34a of closure 34. Accordingly, the relative configuration of closure strips 34 and 36 leaves a generally triangular (actually, preferably trapezoidal) open area 42, which is outlined in phantom in Fig. 6. This area is filled with non-magnetic material, which may in the simplest case simply be air, but is preferably a diamagnetic substance such as copper, etc.

Closure 118 is similarly constructed of inner closure strips 38 and one or more additional shorter outer strips 40.

A variation on the structure shown in Fig. 6 and just described, constituting a preferred alternative embodiment, is illustrated in Fig. 7. In this configuration, it will be noted that a series of write closures 34' are utilized alongside the narrowed read core 120, in much the same manner as is true in the embodiment of Fig. 6, but that the closures 34' of Fig. 7 completely fill the space created by the narrowed read core. Once again, at least one additional outer closure strip 36' is utilized, (although at least one more, shown as 36'' in phantom may also be used. Once again, the end face 36a' is preferably blunt or right-angled, rather than angularly sloping like the adjacent faces 34a' presented by the closure strips 34; however, in this case it is perhaps not essential (even though desirable), to fill the trapezoidal area between end face 36a' and the adjacent end faces 34a' with non-magnetic material.

As will be appreciated, the write closures 34' and 36' are all of magnetic material and are stacked adjacent one another in direct contact, having no isolation material between them comparable to the layer 126 which is provided between the write closures 122 and the read core 120, as described above. Consequently, the write closures 34' function together to carry magnetic flux present at the end of the gap 116, as a counterpart to the full width of the write core 112. The additional closure elements 36' and 36'' are also in magnetic communication with the closure elements 34', but due to the recessed location of their end face 36a, these additional closure strips do not affect or change the effective gap width; i.e., the presence of the additional closure members 36', 36'' do not cause any significant widening of the track written by the transducer having such a core structure. On the other hand, the additional closures 36', 36'' do have a very significant effect on the overall magnetic performance, since they lower the effective reluctance of the overall write closure structure, in effect acting in the same manner as resistances added in parallel.

The effect of the write closure structure just described may be further understood and appreciated by reference to the simplified circuit shown in Fig. 3.

As mentioned above, the degree of isolation in the disclosed multi-component core structure is a function of the magnetic reluctance of the write closures (i.e., $R_3$)

in relation to the reluctance attributable to the read core structure, including the read core itself and the isolation layers 124 and 126 (as represented by $R_x + R_2$). Accordingly, an effective way of increasing such isolation would be to increase the relative amount of flux passing through both of the identical write closures 118 and 122; however, this is not merely a matter of increasing the relative size of the write closure members since in the first place the read gap and write gap parameters are determined by other considerations. Furthermore, as discussed above, it is desirable to limit the area of overlap between the write closures and the read core, since this in itself increases the degree of effective isolation.

Decreasing the reluctance of the write closure structure in the manner taught with respect to the embodiment just described thus becomes another highly effective but previously unappreciated way of achieving the desired additional isolation of write core structure from read core structure and, as has already been indicated, this is accomplished without significantly changing the effective gap length.

As with the head structure of Figs. 1 and 2 described above, core 120 may be on the order of about half the total width of the write core 12 (for example, .127 and .254 mm (five mils and ten mils), respectively); the combined thickness of the write closures 188 and 122 (on both sides of the read core 120) will thus be on the order of about .102 mm (four mils) (allowing approximately .0127mm (one-half mil) for each of the isolation layers 124 and 126). While the particular number of individual write closure strips 34, 36 which make up this total thickness is not a matter of great importance, the general arrangement illustrated (two or three such strips on each side of the read core) is believed generally representative of a good physical implementation.

The outermost (additional, or supplemental) write closure strips 36 and 40 should have an effective thickness which is determined by the extent of reduction desired in the effective total reluctance of the write closures 188 and 122, in order to accomplish the desired reduction of flux coupled from the write closures 118 and 122 to the read core 120 during read operations. One example, consistent with and corresponding to the physical example referred to above, comprises the use of one or two such additional closure strips 36, which, in the present example, are identical to closure strips 40, whose thickness is on the same order as that indicated for the other such closure strips 34, 38. It is to be noted, in this regard, that the extent to which these additional closure strips 36 and 40 are recessed from the face of the head is preferably between about .0762 and .508 mm (three thousandths and twenty thousandths of an inch), in a head corresponding generally to the foregoing example, this amount being at least about 30% of the overall gap length and being at least three times the height of the step at the stepped end extremity.

By use of an additional write closure 36 in a relationship comparable to that shown in Fig. 7, and consistent with the foregoing example, read core versus write closure isolation may be reduced significantly, and may achieve isolation magnitudes on the order of at least 95%. This significantly improves the performance of the transducer involved by making it much less sensitive to adjacent track signals and other such noise which otherwise would be picked up by the write closures.

Generally, the same structural materials used to construct write and read cores 12 and 20, write closures 18 and 22, and isolation elements 24 and 26, may be used to construct write and read cores 112 and 120, write closures 118 and 122, and isolation elements 124 and 126, respectively. The various components ("strata") constituting the different core elements may each comprise a "stack" of thin sheet-like laminae, as is often done to reduce eddy current effects, but this is not really essential in transducer cores generally, particularly where (as here) the intended application is to write and read relatively narrow and closely-spaced tracks of magnetic transitions.

## Claims

1. A transducer head magnetic core structure (10;110) comprising a magnetic circuit formed by magnetic core elements, the circuit having at least one gap (16;116) where magnetic flux in the circuit may access a magnetically-recordable data storage media at a face of the head; the gap (16;116) having a pair of mutually-spaced sides defined by first (12;112) and second 14;114) magnetic pole structures located generally opposite one another, at least one of which has a layered structure comprising a first strata (20;120) and an adjacent second strata (18,22; 118,122), the first strata having a thickness at the said face measured in a direction along the gap (16; 116) which is less than that of the other pole structure; magnetic isolation means (24,26;124,126) disposed between the first and second strata at the said one pole structure; the second strata (18,22; 118,122) being arranged to shunt a portion of the magnetic circuit formed by the first strata (20;120), so providing a parallel magnetic return; characterised in that the second strata (18,22;118,122) comprises a first portion (34;38;34') adjacent the face of the head and a second portion (36;40;36') comprising a stepped end extremity (36a,36a') which is recessed from the face, the stepped end extremity reducing the effective overall magnetic reluctance of the second strata (18,22;118,122) while making no substantial contribution, in use, to the effective length of the gap (16;116).

2. A magnetic core structure as claimed in Claim 1 in which the pole structures (12,14;112,114) have substantially the same overall thickness, at the face, measured in a direction along the gap (16;116).

3. A magnetic core structure as claimed in Claim 1 in which the combined thickness of the first and second strata (20;120;18,22;118,122) at the face substantially corresponds to that of the first magnetic pole structure (12;112).

4. A magnetic core structure as claimed in any one of the preceding claims including a pair of second strata (18,22;118,122) disposed one on each side of the first strata (20;120) in a direction along the gap (16; 116).

5. A magnetic core structure as claimed in any one of the preceding claims in which the pole structure (14; 114) having the first (20;120) and second (18,22; 118,122) strata has a thickness rearwardly of the face of the head which is greater than its thickness at the face, the thickness being measured along the gap (16;116).

6. A magnetic core structure as claimed in any one of the preceding claims, in which the pole structure having the first (20,120) and second (18,22; 118,122) strata has a thickness rearwardly of the face of the head which is greater than that of the other pole structure, the thickness being measured along the gap (16;116).

7. A magnetic core structure as claimed in any one of the preceding claims in which the second strata (18,22;118,122) comprises a layered structure having at least two layers, one layer being offset from the other to provide the stepped end extremity.

8. A magnetic core structure as claimed in any one of the preceding claims in which the stepped end extremity is set back from the corresponding edge extremity of the first strata over a distance of substantially 0.08 mm or greater.

9. A magnetic core structure as claimed in any one of the preceding claims in which the stepped end extremity is set back from the corresponding edge extremity of the first strata (20;120) over a distance of substantially thirty percent of the overall gap length, or greater.

10. A magnetic core structure as claimed in any one of the preceding claims in which the stepped end extremity is set back from the corresponding edge extremity of the first strata (20;120) over a distance of substantially three times the height of the step at the stepped end extremity, or greater.

## Patentansprüche

1. Magnetkernstruktur eines Wandlerkopfes (10; 110), die einen aus Magnetkernelementen gebildeten Magnetkreis aufweist, wobei der Kreis wenigstens einen Spalt (16; 116) aufweist, wo der Magnetfluß in dem Kreis auf ein Speichermedium für magnetisch aufzeichenbare Daten an einer Seite des Kopfes zugreifen kann; wobei der Spalt (16; 116) ein Paar voneinander beabstandete Seiten aufweist, die durch erste (12; 112) und zweite (14; 114) im wesentlichen einander gegenüberliegende Magnetpolstrukturen definiert werden, von denen wenigstens eine eine Schichtstruktur mit einer ersten Schicht (20; 120) und einer benachbarten zweiten Schicht (18, 22; 118, 122) aufweist, wobei die erste Schicht eine an der Fläche in Richtung entlang des Spalts (16; 116) gemessene Dicke hat, die geringer als die der anderen Polstruktur ist; und magnetische Isoliereinrichtungen (24, 26; 124, 126) aufweist, die zwischen der ersten und zweiten Schicht an der einen Polstruktru angeordnet sind; wobei die zweite Schicht (18, 22; 118, 122) so angeordnet ist, daß sie einen Teil des durch die erste Schicht (20; 120) gebildeten Magnetkreises abzweigt un so für eine parallelen magnetischen Rückfluß sorgt; **dadurch gekennzeichnet, daß** die zweite Schicht (18, 22; 118, 122) einen ersten der Vorderseite des Kopfes benachbarten Bereich (34; 38; 34') und einen zweiten Bereich (36; 40; 36') aufweist, der ein abgestuftes äußeres Ende (36a, 36a'), das von der Vorderseite zurückgesetzt ist, aufweist, wobei das abgestufte äußere Ende die wirksame Gesamtmagnetreluktanz der zweiten Schicht (18, 22; 118, 122) verringert, während es bei der Verwendung keinen wesentlichen Beitrag zur wirksamen Länge des Spalts (16; 116) leistet.

2. Magnetkernstruktur nach Anspruch 1, bei der die Polstrukturen (12, 14; 112, 114) an der Vorderseite, gemessen in einer Richtung entlang des Spalts (16; 116) im wesentlichen die gleiche Gesamtdicke haben.

3. Magnetkernstruktur nach Anspruch 1, bei der die kombinierte Dicke der ersten und zweiten Schicht (20; 120; 18, 22; 118, 122) an der Vorderseite im wesentlichen der der ersten Magnetpolstruktur (12; 112) entspricht.

4. Magnetkernstruktur nach einem der vorhergehenden Ansprüche, die ein Paar zweiter Schichten (18, 22; 118, 122) umfaßt, von denen eine auf der jeder Seite der ersten Schicht (20; 120) in einer Richtung entlang des Spalts (16; 116) angeordnet ist.

5. Magnetkernstruktur nach einem der vorhergehenden Ansprüche, bei der die die erste (20; 102) und zweite (18, 22; 118, 122) Schicht aufweisende Polstruktur (14; 114) rückwärtig von der Vorderseite des Kopfes eine Dicke aufweist, die größer als ihre Dicke an der Vorderseite ist, wobei die Dicke entlang des Spalts (16; 116) gemessen wird.

6. Magnetkernstruktur nach einem der vorhergehenden Ansprüche, bei der die die erste (20; 102) und zweite (18, 22; 118, 122) Schicht aufweisende Polstruktur (14; 114) rückwärtig von der Vorderseite des Kopfes eine Dicke aufweist, die größer als die der anderen Polstruktur ist, wobei die Dicke entlang des Spalts (16; 116) gemessen wird.

7. Magnetkernstruktur nach einem der vorhergehenden Ansprüche, bei der die zweite Schicht (18, 22; 118, 122) eine Schichtstruktur aufweist, die wenigstens zwei Schichten hat, wobei eine Schicht zur anderen versetzt ist, um das abgestufte äußere Ende zu schaffen.

8. Magnetkernstruktur nach einem der vorhergehenden Ansprüche, bei der das abgestufte äußere Ende von der entsprechenden Endkante der ersten Schicht über eine Strecke von im wesentlichen 0,08 mm or mehr zurückgesetzt ist.

9. Magnetkernstruktur nach einem der vorhergehenden Ansprüche, bei der das abgestufte äußere Ende von der entsprechenden Endkante der ersten Schicht (20; 120) über eine Strecke von im wesentlichen 30 % der Gesamtspaltlänge oder mehr zurückgesetzt ist.

10. Magnetkernstruktur nach einem der vorhergehenden Ansprüche, bei der das abgestufte äußere Ende von der entsprechenden Endkante der ersten Schicht (20; 120) über eine Strecke von im wesentlichen dreimal der Höhe der Stufe an dem abgestuften äußeren Ende oder mehr zurückgesetzt ist.

## Revendications

1. Structure (10;110) de noyau magnétique de tête de transducteur comprenant un circuit magnétique formé par des éléments de noyau magnétique, le circuit comprenant au moins un entrefer (16;116), dans lequel un flux magnétique présent dans le circuit peut accéder à des supports de mémoire de données enregistrables magnétiquement, sur une face de la tête; l'entrefer (16;116) possédant un couple de côtés séparés l'un de l'autre et définis par une première structure de pôle magnétique (12; 112) et une seconde structure de pôle magnétique (14;114), situées d'une manière générale à l'opposé l'une de l'autre et dont au moins une première possède une structure stratifiée comprenant des premières couches (20;120) et une seconde couche adjacente (18,22;118,122), la première couche possédant une épaisseur au niveau de la surface, mesurée dans une direction s'étendant le long de l'entrefer (16; 116), qui est inférieure à celle de l'autre structure de pôle; des moyens d'isolation magnétique (24,26;124,126) disposés entre les première et seconde couches au niveau de ladite première structure de pôle; la seconde couche (18,22;118,122) étant disposée de manière à shunter une partie du circuit magnétique formé par la première couche (20;120) de manière à former un retour magnétique parallèle; caractérisé en ce que la seconde couche (18,22; 118,122) comprend une première partie (34;38;34') située au voisinage de la face de la tête et une seconde partie (36;40;36') comprenant une extrémité étagée (36a,36a'), qui est en renfoncement à partir de la face, l'extrémité étagée réduisant la reluctance magnétique globale effective de la seconde couche (18,22; 118,122), tout en n'apportant, en fonctionnement, aucune contribution importante à la longueur effective de l'entrefer (16;116).

2. Structure de noyau magnétique selon la revendication 1, dans laquelle les structures de pôles (12,14; 112,114) possèdent essentiellement la même épaisseur totale, au niveau de la face, mesurée dans une direction s'étendant le long de l'entrefer (16;116).

3. Structure de noyau magnétique selon la revendication 1, dans laquelle l'épaisseur combinée des première et seconde couches (20;120;18,22;118,122) au niveau de la face correspondent essentiellement à celles de la première structure de pôle magnétique (12;112).

4. Structure de noyau magnétique selon l'une quelconque des revendications précédentes, comprenant un couple de secondes couches (18,22; 118,122) disposées de chaque côté de la première couche (20;120) dans une direction s'étendant le long de l'entrefer (16;116).

5. Structure de noyau magnétique selon l'une quelconque des revendications précédentes, dans laquelle la structure de pôle (14;114) possédant la première couche (20;120) et la seconde couche (18,22;118,122) possède une épaisseur, en arrière de la face de la tête, qui est supérieure à son épaisseur au niveau de la face, l'épaisseur étant mesurée le long de l'entrefer (16;116).

6. Structure de noyau magnétique selon l'une quelconque des revendications précédentes, dans laquelle la structure de pôle possédant la première couche (20;120) et la seconde couche (18,22; 118,122) possèdent une épaisseur en arrière de la face de la tête, qui est supérieure à celle de l'autre structure de pôle, l'épaisseur étant mesurée le long de l'entrefer (16;116).

7. Structure de noyau magnétique selon l'une quelconque des revendications précédentes, dans laquelle la seconde couche (18,22;118,122) comprend une structure stratifiée possédant au moins deux couches, une couche étant décalée par rapport à l'autre pour former l'extrémité étagée.

8. Structure de noyau magnétique selon l'une quelconque des revendications précédentes, dans laquelle l'extrémité étagée est en retrait, d'une distance égale essentiellement à 0,08 mm ou plus, par rapport à l'extrémité correspondante de la première couche.

9. Structure de noyau magnétique selon l'une quelconque des revendications précédentes, dans laquelle l'extrémité étagée est en retrait d'une distance égale essentiellement à 30 % de la longueur totale de l'entrefer ou plus, par rapport à l'extrémité correspondante de la première couche (20;120).

10. Structure de noyau magnétique selon l'une quelconque des revendications précédentes, dans laquelle l'extrémité étagée est en retrait, d'une distance égale essentiellement au triple, ou plus, de la hauteur de la partie étagée au niveau de l'extrémité étagée par rapport à l'extrémité correspondante du bord de la première couche (20;120).

EP 0 572 098 B1

Fig. I.

Fig. 2.

Fig. 3.

11

Fig. 4.

Fig. 5.

Fig. 6

Fig. 7